# FASCICULE DE BREVET EUROPEEN

(11) **EP 2 984 137 B1**
(45) Date de publication et mention de la délivrance du brevet: **19.04.2017**
(21) Numéro de dépôt: 14719045.8
(22) Date de dépôt: 26.03.2014
(51) Int. Cl.: C08L 33/12, C08L 77/00

(54) **COMPOSITION A BASE DE PMMA TRANSPARENTE ET ANTISTATIQUE**
TRANSPARENTE UND ANTISTATISCHE PMMA-ZUSAMMENSETZUNG
TRANSPARENT AND ANTISTATIC PMMA COMPOSITION

(30) Priorité: 10.04.2013 FR 1353244
(43) Date de publication de la demande: 17.02.2016
(73) Titulaire: Arkema France, 92700 Colombes (FR)
(72) Inventeur: BERDIN, Laure, F-27300 Bernay (FR); RAULINE, Damien, F-27270 Saint-Quentin-des-Isles (FR); LOYEN, Karine, F-27500 Pont-Audemer (FR); MALET, Frédéric, F-69007 Lyon (FR)
(74) Mandataire: Hérard, Elise
(86) Numéro de dépôt international: PCT/FR2014/050711
(87) Numéro de publication internationale: WO 2014/167202

(56) Documents cités:
- WO-A2-01/18111

## Description

### Domaine de l'invention

La présente invention se rapporte à une composition transparente antistatique à base de polyméthacrylate de méthyle (PMMA).

Au sens de l'invention, on entend par :
- « composition à base de polyméthacrylate de méthyle (PMMA) », une composition comprenant de 55 à 99,9% en poids de PMMA ;
- « composition transparente », une composition de transmittance au moins égale à 88% selon la norme ASTM D1003 - 97 / ISO 13468, et de Haze inférieur à 15%, de préférence inférieur à 10%, de préférence inférieur à 5%, selon la norme ASTM D1003 - 97, ces 2 propriétés étant mesurées à 560 nm sur plaque de 2 mm d'épaisseur.
- « composition antistatique », une composition dont la résistivité superficielle (ou surfacique) est inférieure à 10¹² ohm/carré mesurée selon la norme ASTM D257.

### Art antérieur

La formation et la rétention de charges d'électricité statique à la surface de la plupart des matières plastiques sont connues. Dans le cas du PMMA, au cours du transport des granulés de PMMA notamment, la formation d'électricité statique sur les granulés de PMMA conduit ces granulés à se coller les uns aux autres rendant leur séparation difficile, et à former un bloc, ce qui rend problématique le déchargement des granulés par exemple. La présence d'électricité statique sur des objets transparents en PMMA peut provoquer l'accumulation de poussières sur ces objets et ainsi gêner leur utilisation et leur apparence esthétique. Au niveau industriel, de la poudre résiduelle de PMMA a aussi tendance à coller sur les pièces usinées. L'accumulation de poussières à la surface de ces objets altère leur transparence.

L'art antérieur a décrit des agents antistatiques tels que des surfactants ioniques du type amines éthoxylées ou sulfonates que l'on ajoute dans des polymères. Cependant les propriétés antistatiques des polymères dépendent de l'humidité ambiante et elles ne sont pas permanentes puisque ces agents migrent à la surface des polymères et disparaissent. Il a alors été proposé comme agents antistatiques des copolymères à blocs polyamides et blocs polyéthers hydrophiles, ces agents ont l'avantage de ne pas migrer et donc de donner des propriétés antistatiques permanentes et de plus indépendantes de l'humidité ambiante.

La présente invention a donc pour but de rendre antistatique de façon permanente le PMMA transparent sans altérer sa transparence.

La demande de brevet japonais JP 60 023 435 A publiée le 6 février 1985 décrit des compositions antistatiques comprenant 5 à 80% de polyétheresteramide et 95 à 20% d'une résine thermoplastique choisie entre autres parmi le polystyrène, l'ABS et le PMMA, cette résine étant fonctionnalisée par l'acide acrylique ou l'anhydride maléique. Des exemples montrent des compositions constituées de 60 à 70 parties de PMMA carboxylé et de 40 à 30 parties de polyétheresteramide (pour 100 parties). D'autres montrent des compositions constituées de 30 à 45 parties de PMMA carboxylé, de 40 à 25 parties de PMMA et 30 parties de polyetheresteramide (pour 100 parties). Il n'est rien écrit sur la transparence des compositions à base de PMMA de plus il est nécessaire de disposer de PMMA carboxylé en proportions importantes.

La demande de brevet japonais JP 03 237 149 A publiée le 23 octobre 1991 décrit des compositions antistatiques constituées de 40 à 99% d'une résine acrylique, 1 à 60% de polyétheresteramide et 0,2 à 15% d'un polymère greffé ayant des fonctions anhydride maléique ou époxyde et une partie soluble dans la résine acrylique. Le polymère greffé est compliqué à préparer.

Les demandes de brevet japonais JP 08 253640 A publiée le 1 octobre 1996 et JP 04 146 947 A publiée le 20 mai 1992 décrivent des compositions antistatiques et transparentes constituées de résine acrylique, de polyetheresteramide et de sels. Il n'est pas souhaitable d'ajouter des sels dans de telles compositions parce qu'ensuite au cours de l'utilisation des compositions ils peuvent migrer.

Les demandes de brevet japonais JP 05 295 213 A publiée le 9 novembre 1993 et JP 05 287 157 A publiée le 2 novembre 1993 décrivent des compositions antistatiques et transparentes constituées de résine acrylique, de polyétheresteramide et éventuellement d'un électrolyte ou d'acide sulfonique. Elles ont le même inconvénient que les compositions précédentes.

Les demandes de brevet japonais JP 05 078 543 A et JP 04 146 947 A décrivent des compositions antistatiques et transparentes constituées de résine acrylique et de polyetheresteramide. Les propriétés mécaniques de la résine de base sont fortement altérées.

La demande de brevet EP 1144505 décrit une composition antistatique et à tenue au choc améliorée comprenant pour 100 parties en poids:, 5 à 20 parties de copolymère à blocs polyamide et blocs polyéther comprenant essentiellement des motifs oxyde d'éthylène -(C2H4-O)- ; et 95 à 80 parties de (A)+(C), (A) étant un polymère acrylique, (C) étant un polymère choisi parmi les modifiants choc acryliques, les copolymères (C1) de faible masse du styrène et d'un anhydride d'acide carboxylique insaturé, les copolymères (C2) de l'éthylène et d'un anhydride d'acide carboxylique insaturé, les copolymères (C3) de l'éthylène et d'un époxyde insaturé ou leurs mélanges. Cependant, les propriétés observées en termes de résistivité superficielle s'avèrent insuffisantes et la transparence du PMMA est fortement altérée.

La présente invention a donc pour but de fournir une composition transparente à base de PMMA à propriétés antistatiques permanentes, prête à l'emploi et facile à mettre en oeuvre, qui ne présente pas les inconvénients de l'art antérieur, et dont les propriétés mécaniques par rapport au PMMA seul ne sont pas modifiées.

On a maintenant trouvé de nouvelles compositions de PMMA à la fois antistatiques de façon permanente et transparentes. La demanderesse a démontré que, de manière surprenante, l'ajout à une matrice PMMA d'un type de copolymère à blocs comprenant une teneur totale en PEG supérieure à 50% en poids, permettait d'obtenir un PMMA aux propriétés antistatiques améliorées et permanentes tout en gardant la même transparence que le PMMA seul, et ses propriétés mécaniques.

### Description détaillée de l'invention

La présente invention a donc pour objet une composition transparente antistatique à base de polyméthacrylate de méthyle (PMMA), comprenant :
- de 55 à 99,9% en poids de PMMA, et
- de 0,1 à 45% en poids d'au moins un copolymère (PEBA) à blocs polyamide (PA) et à blocs polyéther (PE) comprenant du polyéthylène glycol (PEG),
sur le poids total de la composition,
ledit copolymère étant caractérisé en ce qu'il comporte entre 50% et 80% en poids de PEG sur le poids total de copolymère.

Avantageusement, ladite composition comprend :
- de 65 à 97%, de préférence de 70 à 95%, de préférence de 80 à 93%, de préférence de 80 à 88%, de préférence de 85 à 88%, en poids de PMMA, et
- de 3 à 35%, de préférence de 5 à 30%, de préférence de 7 à 20%, de préférence de 12 à 20%, de préférence de 12 à 15%, en poids de copolymère comprenant du PEG,
sur le poids total de la composition.

De préférence, ledit copolymère comporte de 55% à 75%, de préférence de 60 à 70%, en poids de PEG sur le poids total de copolymère.

Le terme « PMMA » désigne un homopolymère ou copolymère de méthacrylate de méthyle (MMA) ou leurs mélanges.

Selon un mode de réalisation, l'homo- ou le copolymère de méthacrylate de méthyle (MMA) comprend au moins 70%, de préférence au moins 80%, avantageusement au moins 90% et plus avantageusement au moins 95% en poids de méthacrylate de méthyle.

Selon un autre mode de réalisation, le PMMA est un mélange d'au moins un homopolymère et d'au moins un copolymère de MMA, ou un mélange d'au moins deux homopolymères ou deux copolymères de MMA ayant un poids moléculaire moyen différent, ou un mélange d'au moins deux copolymères de MMA ayant une composition de monomères différente.

Le copolymère de méthacrylate de méthyle (MMA) comprend de 70 % à 99,7 % en poids de méthacrylate de méthyle et de 0,3 à 30 % en poids d'au moins un monomère contenant au moins une insaturation éthylénique qui peut copolymériser avec le méthacrylate de méthyle.

Ces monomères sont bien connus et on peut notamment mentionner les acides acrylique et méthacrylique et les (méth)acrylates d'alkyle dans lesquels le groupe alkyle contient de 1 à 12 atomes de carbone. À titre d'exemple, on peut mentionner l'acrylate de méthyle et le (méth)acrylate d'éthyle, de butyle ou de 2-éthylhexyle. De préférence, le comonomère est un acrylate d'alkyle dans lequel le groupe alkyle contient de 1 à 4 atomes de carbone.

Selon un mode de réalisation préféré, le copolymère de méthacrylate de méthyle (MMA) comprend de 80 % à 99,7 %, avantageusement de 90 % à 99,7 % et plus avantageusement de 90 % à 99,5 % en poids de méthacrylate de méthyle et de 0,3 % à 20 %, avantageusement de 0,3 % à 10 % et plus avantageusement de 0,5 % à 10 % en poids d'au moins un monomère contenant au moins une insaturation éthylénique qui peut copolymériser avec le méthacrylate de méthyle. De préférence, le comonomère est choisi parmi l'acrylate de méthyle ou l'acrylate d'éthyle ou leurs mélanges.

Le poids moléculaire moyen en poids du polymère (méth)acrylique peut être élevé, ce qui signifie supérieur à 50 000 g/mol, de préférence supérieur à 100 000 g/mol. Le poids moléculaire moyen en poids peut être mesuré par chromatographie d'exclusion stérique (SEC).

En ce qui concerne le monomère (méth)acrylique, le monomère est choisi parmi l'acide acrylique, l'acide méthacrylique, les monomères acryliques d'alkyle, les monomères méthacryliques d'alkyle et leurs mélanges.

De préférence, le monomère est choisi parmi l'acide acrylique, l'acide méthacrylique, les monomères acryliques d'alkyle, les monomères méthacryliques d'alkyle et leurs mélanges, le groupe alkyle contenant de 1 à 22 carbones, linéaires, ramifiés ou cycliques ; le groupe alkyle contenant de préférence 1 à 12 carbones, linéaires, ramifiés ou cycliques.

Avantageusement, le monomère (méth)acrylique est choisi parmi le méthacrylate de méthyle, le méthacrylate d'éthyle, l'acrylate de méthyle, l'acrylate d'éthyle, l'acide méthacrylique, l'acide acrylique, l'acrylate de n-butyle, l'acrylate d'isobutyle, le méthacrylate de n-butyle, le méthacrylate d'isobutyle, l'acrylate de cyclohexyle, le méthacrylate de cyclohexyle, l'acrylate d'isobornyle, le méthacrylate d'isobornyle et leurs mélanges.

Plus avantageusement, le monomère (méth)acrylique est choisi parmi le méthacrylate de méthyle, l'acrylate d'isobornyle ou l'acide acrylique et leurs mélanges.

Selon un mode de réalisation préféré, au moins 50 % en poids, de préférence au moins 60% en poids du monomère est le méthacrylate de méthyle.

Selon un mode de réalisation davantage préféré, au moins 50% en poids, de préférence au moins 60 % en poids, de manière davantage préférée au moins 70% en poids et avantageusement au moins 80% en poids et encore plus avantageusement 90% en poids du monomère est un mélange de méthacrylate de méthyle avec de l'acrylate d'isobornyle et/ou de l'acide acrylique.

En tant qu'additifs du PMMA, on peut mentionner les additifs organiques tels que les modificateurs de la résistance aux impacts généralement appelés « modifiants choc », ou les copolymères séquencés, les stabilisateurs thermiques, les stabilisateurs UV, les lubrifiants et leurs mélanges.

Le modifiant choc est sous la forme de fines particules comprenant un noyau élastomère et au moins une enveloppe thermoplastique, la taille des particules étant généralement inférieure à 1 µm et avantageusement comprise entre 50 et 300 µm. Le modifiant choc est préparé par polymérisation en émulsion. La teneur du modifiant choc dans le sirop (méth)acrylique liquide est de 0 à 50 % en poids, de préférence de 0 à 25 % en poids et avantageusement de 0 à 20 % en poids.

En tant que charges du PMMA, on peut mentionner les nanotubes de carbone ou les charges minérales, y compris les nanocharges minérales (TiO2, silice).

Les copolymères à blocs polyéther et blocs polyamide abrégés « PEBA » résultent de la polycondensation de blocs polyamides à extrémités réactives avec des blocs polyéthers à extrémités réactives, telles que, entre autres :
1) blocs polyamides à bouts de chaîne diamines avec des blocs polyoxyalkylènes à bouts de chaînes dicarboxyliques.
2) blocs polyamides à bouts de chaînes dicarboxyliques avec des blocs polyoxyalkylènes à bouts de chaînes diamines, obtenues par exemple par cyanoéthylation et hydrogénation de blocs polyoxyalkylène alpha-oméga dihydroxylées aliphatiques appelées polyétherdiols
3) blocs polyamides à bouts de chaînes dicarboxyliques avec des polyétherdiols, les produits obtenus étant, dans ce cas particulier, des polyétheresteramides.

Les blocs polyamides à bouts de chaînes dicarboxyliques proviennent, par exemple, de la condensation de précurseurs de polyamides en présence d'un diacide carboxylique limiteur de chaîne. Les blocs polyamides à bouts de chaînes diamines proviennent par exemple de la condensation de précurseurs de polyamides en présence d'une diamine limiteur de chaîne.

La masse molaire en nombre Mn des blocs polyamides est comprise entre 400 et 20000 g/mole et de préférence entre 500 et 10000 g/mole.

Les polymères à blocs polyamides et blocs polyéthers peuvent aussi comprendre des motifs répartis de façon aléatoire.

On peut utiliser avantageusement trois types de blocs polyamides.

Selon un premier type, les blocs polyamides proviennent de la condensation d'un diacide carboxylique, en particulier ceux ayant de 4 à 20 atomes de carbone, de préférence ceux ayant de 6 à 18 atomes de carbone et d'une diamine aliphatique ou aromatique, en particulier celles ayant de 2 à 20 atomes de carbone, de préférence celles ayant de 6 à 14 atomes de carbone.

A titre d'exemples d'acides dicarboxyliques, on peut citer l'acide 1,4-cyclohexyldicarboxylique, les acides butanedioïque, adipique, azélaïque, subérique, sébacique, dodécanedicarboxylique, octadécanedicarboxylique et les acides téréphtalique et isophtalique, mais aussi les acides gras dimérisés.

A titre d'exemples de diamines, on peut citer la tétraméthylène diamine, l'hexaméthylènediamine, la 1,10-décaméthylènediamine, la dodécaméthylènediamine, la triméthylhexaméthylène diamine, les isomères des bis-(4-aminocyclohexyl)-méthane (BACM), bis-(3-méthyl-4-aminocyclohexyl)méthane (BMACM), et 2-2-bis-(3-méthyl-4-aminocyclohexyl)-propane (BMACP), et paraamino-di-cyclo-hexyl-méthane (PACM), et l'isophoronediamine (IPDA), la 2,6-bis-(aminométhyl)-norbornane (BAMN) et la pipérazine (Pip).

Avantageusement, on a des blocs PA4.12, PA4.14, PA4.18, PA6.10, PA6.12, PA6.14, PA6.18, PA9.12, PA10.10, PA10.12, PA10.14 et PA10.18.

Selon un deuxième type, les blocs polyamides résultent de la condensation d'un ou plusieurs acides alpha oméga aminocarboxyliques et/ou d'un ou plusieurs lactames ayant de 6 à 12 atomes de carbone en présence d'un diacide carboxylique ayant de 4 à 12 atomes de carbone ou d'une diamine. A titre d'exemples de lactames, on peut citer le caprolactame, l'oenantholactame et le lauryllactame. A titre d'exemples d'acide alpha omega amino carboxylique, on peut citer les acides aminocaproïque, amino-7-heptanoïque, amino-11-undécanoïque et amino-12-dodécanoïque.

Avantageusement les blocs polyamides du deuxième type sont en polyamide 11, en polyamide 12 ou en polyamide 6.

Selon un troisième type, les blocs polyamides résultent de la condensation d'au moins un acide alpha oméga aminocarboxylique (ou un lactame), au moins une diamine et au moins un diacide carboxylique.

Dans ce cas, on prépare, les blocs polyamide PA par polycondensation :
- de la ou des diamines aliphatiques linéaires ou aromatiques ayant X atomes de carbone ;
- du ou des diacides carboxyliques ayant Y atomes de carbone ; et
- du ou des comonomères {Z}, choisis parmi les lactames et les acides alpha-oméga aminocarboxyliques ayant Z atomes de carbone et les mélanges équimolaires d'au moins une diamine ayant X1 atomes de carbone et d'au moins un diacide carboxylique ayant Y1 atomes de carbones, (X1, Y1) étant différent de (X, Y),

- ledit ou lesdits comonomères {Z} étant introduits dans une proportion pondérale allant jusqu'à 50%, de préférence jusqu'à 20%, encore plus avantageusement jusqu'à 10% par rapport à l'ensemble des monomères précurseurs de polyamide ;
- en présence d'un limiteur de chaîne choisi parmi les diacides carboxyliques ; Avantageusement, on utilise comme limiteur de chaîne le diacide carboxylique ayant Y atomes de carbone, que l'on introduit en excès par rapport à la stoechiométrie de la ou des diamines.

Selon une variante de ce troisième type les blocs polyamides résultent de la condensation d'au moins deux acides alpha oméga aminocarboxyliques ou d'au moins deux lactames ayant de 6 à 12 atomes de carbone ou d'un lactame et d'un acide aminocarboxylique n'ayant pas le même nombre d'atomes de carbone en présence éventuelle d'un limiteur de chaîne. A titre d'exemple d'acide alpha omega amino carboxylique aliphatique, on peut citer les acides aminocaproïques, amino-7-heptanoïque, amino-11-undécanoïque et amino-12-dodécanoïque. A titre d'exemple de lactame, on peut citer le caprolactame, l'oenantholactame et le lauryllactame. A titre d'exemple de diamines aliphatiques, on peut citer l'hexaméthylènediamine, la dodécaméthylènediamine et la triméthylhexaméthylène diamine. A titre d'exemple de diacides cycloaliphatiques, on peut citer l'acide 1,4-cyclohexyldicarboxylique. A titre d'exemple de diacides aliphatiques, on peut citer les acides butane-dioïque, adipique, azélaïque, subérique, sébacique, dodécanedicarboxylique, les acides gras dimérisés (ces acides gras dimérisés ont de préférence une teneur en dimère d'au moins 98%; de préférence ils sont hydrogénés; ils sont commercialisés sous la marque "PRIPOL" par la société "UNICHEMA", ou sous la marque EMPOL par la société HENKEL) et les Polyoxyalkylènes - α,ω diacides. A titre d'exemple de diacides aromatiques, on peut citer les acides téréphtalique (T) et isophtalique (I). A titre d'exemple de diamines cycloaliphatiques, on peut citer les isomères des bis-(4-aminocyclohexyl)-méthane (BACM), bis-(3-méthyl-4-aminocyclohexyl)méthane (BMACM), et 2-2-bis-(3-méthyl-4-aminocyclohexyl)-propane(BMACP), et para-amino-di-cyclo-hexyl-méthane (PACM). Les autres diamines couramment utilisées peuvent être l'isophoronediamine (IPDA), la 2,6-bis-(aminométhyl)-norbornane (BAMN) et la pipérazine.

A titre d'exemples de blocs polyamides du troisième type, on peut citer les suivantes
- 6.6/6 dans laquelle 6.6 désigne des motifs hexaméthylènediamine condensée avec l'acide adipique. 6 désigne des motifs résultant de la condensation du caprolactame.
- 6.6/6.10/11/12 dans laquelle 6.6 désigne l'hexaméthylènediamine condensée avec l'acide adipique. 6.10 désigne l'hexaméthylènediamine condensée avec l'acide sébacique. 11 désigne des motifs résultant de la condensation de l'acide aminoundécanoïque. 12 désigne des motifs résultant de la condensation du lauryllactame.

Avantageusement, ledit au moins un bloc polyamide du(des) copolymère(s) utilisé(s) dans la composition de l'invention comprend au moins un des monomères de polyamide suivants: 6, 11, 12, 5.4, 5.9, 5.10, 5.12, 5.13, 5.14, 5.16, 5.18, 5.36, 6.4, 6.9, 6.10, 6.12, 6.13, 6.14, 6.16, 6.18, 6.36, 10.4, 10.9, 10.10, 10.12, 10.13, 10.14, 10.16, 10.18, 10.36, 10.T, 12.4, 12.9, 12.10, 12.12, 12.13, 12.14, 12.16, 12.18, 12.36, 12.T et leurs mélanges ou copolymères ; et de préférence choisi parmi les monomères de polyamide suivants: 6, 11, 12, 6.10, 10.10, 10.12, et leurs mélanges ou copolymères.

De préférence, les blocs PA comprennent au moins 30%, de préférence au moins 50%, de préférence au moins 75%, de préférence 100%, en poids de PA 11 sur le poids total de blocs PA.

Les blocs polyéthers représentent 50 à 80 % en poids du copolymère à blocs polyamides et polyéthers. La masse Mn des blocs polyéther est comprise entre 100 et 6 000 g/mole et de préférence entre 200 et 3 000 g/mole.

Les blocs polyéthers sont constitués de motifs oxyde d'alkylène. Ces motifs peuvent être habituellement des motifs oxyde d'éthylène, des motifs oxyde de propylène ou tétrahydrofurane (qui conduit aux enchaînements polytétraméthylène glycol). On utilise dans la présente composition selon l'invention des blocs PEG (polyethylène glycol) c'est à dire ceux constitués de motifs oxyde d'éthylène, éventuellement combinés à des blocs PPG (propylène glycol) c'est à dire ceux constitués de motifs oxyde de propylène, des blocs PO3G (polytriméthylène glycol) c'est-à-dire ceux constitués de motifs polytriméthylène ether de glycol, et/ou des blocs PTMG c'est à dire ceux constitués de motifs tetraméthylène glycols appelés aussi polytétrahydrofurane. Les copolymères PEBA peuvent comprendre dans leur chaîne plusieurs types de polyéthers, les copolyéthers pouvant être à blocs ou statistiques. Avantageusement, le copolymère de la composition comprend en outre au moins un polyether autre que le PEG, choisi parmi le PTMG, PPG, PO3G, et leurs mélanges. Le PEBA utilisé dans la composition de l'invention comprend plus de 50%, de préférence plus de 55%, voire plus de 60%, en poids de blocs polyéther PEG sur le poids total de PEBA.

On peut également utiliser des blocs obtenus par oxyéthylation de bisphenols, tels que par exemple le bisphenol A. Ces derniers produits sont décrits dans le brevet EP613919.

Les blocs polyéthers peuvent aussi être constitués d'amines primaires éthoxylées. A titre d'exemple d'amines primaires éthoxylées on peut citer les produits de formule : 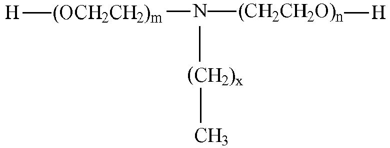 dans laquelle m et n sont compris entre 1 et 20 et x entre 8 et 18. Ces produits sont disponibles dans le commerce sous la marque NORAMOX® de la société CECA et sous la marque GENAMIN® de la société CLARIANT.

Les blocs souples polyéthers peuvent comprendre des blocs polyoxyalkylène à bouts de chaînes NH2, de telles blocs pouvant être obtenues par cyanoacétylation de blocs polyoxyalkylène alpha-oméga dihydroxylés aliphatiques appelées polyétherdiols. Plus particulièrement, on pourra utiliser les Jeffamines (Par exemple Jeffamine® D400, D2000, ED 2003, XTJ 542, produits commerciaux de la société Huntsman, également décrites dans les documents de brevets JP2004346274, JP2004352794 et EP1482011).

Les blocs polyétherdiols sont soit utilisés tels quels et copolycondensés avec des blocs polyamides à extrémités carboxyliques, soit ils sont aminés pour être transformés en polyéther diamines et condensés avec des blocs polyamides à extrémités carboxyliques. La méthode générale de préparation en deux étapes des copolymères PEBA ayant des liaisons ester entre les blocs PA et les blocs PE est connue et est décrite, par exemple, dans le brevet français FR2846332. La méthode générale de préparation des copolymères PEBA de l'invention ayant des liaisons amide entre les blocs PA et les blocs PE est connue et décrite, par exemple dans le brevet européen EP1482011. Les blocs polyéther peuvent être aussi mélangés avec des précurseurs de polyamide et un limiteur de chaîne diacide pour faire les polymères à blocs polyamides et blocs polyéthers ayant des motifs répartis de façon statistique (procédé en une étape).

Bien entendu, la désignation PEBA dans la présente description de l'invention se rapporte aussi bien aux PEBAX® commercialisés par Arkema, aux Vestamid® commercialisés par Evonik®, aux Grilamid® commercialisés par EMS, qu'aux Pelestat® type PEBA commercialisés par Sanyo ou à tout autre PEBA d'autres fournisseurs.

Avantageusement, les copolymères PEBA ont des blocs PA en PA 6, en PA 11, en PA 12, PA 6.12, en PA 6.6/6, en PA 10.10 et/ou en PA 6.14, de préférence des blocs PA 11 et/ou PA 12 ; et des blocs PE en PEG.

De préférence, le copolymère selon l'invention comprend au moins un PEBA choisi parmi: PA6-PEG, PA11-PEG, PA12-PEG, PA10.10-PEG, PA10.12-PEG, PA6/12-PEG et leurs mélanges ; et de préférence comprend, ou mieux est du PA11-PEG. Si les copolymères à blocs décrits ci-dessus comprennent généralement au moins un bloc polyamide et au moins un bloc polyéther, il est évident que la présente invention couvre en fait tous les alliages de copolymère comprenant deux, trois, quatre (voire plus) blocs différents choisis parmi ceux décrits dans la présente description, dès l'instant qu'au moins un de ces blocs est un bloc polyamide, et que le copolymère comprend plus de 50% de PEG.

Avantageusement, l'alliage de copolymère selon l'invention comprend un copolymère segmenté à blocs comprenant trois types de blocs différents (nommé «tribloc» dans la présente description de l'invention), qui résultent de la condensation de plusieurs des blocs décrits ci-dessus. Ledit tribloc est de préférence choisi parmi les copolyétheresteramides, les copolyétheramideuréthanes, dans le(s)quel(s) :
- le pourcentage massique en blocs polyamide est supérieure à 10% ;
- le pourcentage massique en blocs PEG est supérieur à 50% ;
sur la masse totale de tribloc.

Ainsi, selon un mode de réalisation particulier de la composition selon l'invention, ledit copolymère comprenant des blocs PA et des blocs PE est un copolymère segmenté à blocs comprenant trois types de blocs différents, ledit copolymère étant choisi parmi les copolyétheresteramides et les copolyétheramideuréthanes. Avantageusement, le copolymère présente une viscosité inhérente inférieure ou égale à 2 ; de préférence inférieure ou égale à 1,5 ; de préférence inférieure ou égale à 1,4 ; de préférence inférieure ou égale à 1,3 ; de préférence inférieure ou égale à 1,2. Il s'avère que la transparence de la composition est améliorée (transmittance accrue) aux plus basses viscosités de copolymère. Dans la présente description, la viscosité inhérente est mesurée à une concentration en polymère de 0,5% en poids en solution dans du métacrésol sur le poids total de la solution, à 20°C, au moyen d'un viscosimètre Ubbelohde.

Avantageusement, la composition de l'invention grâce à ses propriétés antistatiques permanentes, de résistivité superficielle (ou surfacique) inférieure à 10¹² ohm/carré, ne nécessite pas, et ne comporte donc pas de sel organique.

Néanmoins, il est possible d'incorporer un sel organique ou un liquide ionique à la composition selon l'invention, pour améliorer encore ses performences antistatiques.

Avantageusement, la composition selon l'invention comprend en outre de 0,1 à 10%, de préférence de 0,1 à 5%, en poids d'au moins un sel organique à l'état fondu par rapport au poids total de la composition.

Les sels organiques sont des sels constitués de cations organiques associés avec des anions inorganiques ou organiques.

Ledit au moins un sel organique est ajouté à l'état fondu, c'est à dire lorsque le sel organique est à une température supérieure à sa température de fusion. De préférence, ledit au moins un sel organique a une température de fusion inférieure à 300 °C, de préférence inférieure à 200°C, de préférence inférieure à 100°C et constitue alors avantageusement un liquide ionique, de préférence inférieure à 30°C. Les liquides ioniques en particulier ont pour principales propriétés d'être non volatils (pas de diffusion dans l'atmosphère de composés organiques volatils), ininflammables (donc faciles à manipuler et à stocker), stables à haute température (jusqu'à 400°C pour certains), très bons conducteurs, et très stables vis-à-vis de l'eau et de l'oxygène.

Avantageusement, ledit au moins un sel organique comprend au moins un cation comprenant au moins une des molécules suivantes : ammonium, sulfonium, pyridinium, pyrrolidinium, imidazolium, imidazolinium, phosphonium, lithium, guanidinium, piperidinium, thiazolium, triazolium, oxazolium, pyrazolium, et leurs leurs mélanges.

Avantageusement, ledit au moins un sel organique comprend au moins un anion comprenant au moins une des molécules suivantes : les imides, notamment bis(trifluorométhanesulfonyl)imide (abrégé NTf2-) ; les borates, notamment tétrafluoroborate (abrégé BF4-) ; les phosphates, notamment hexafluorophosphate (abrégé PF6-) ; les phosphinates et les phosphonates, notamment les alkyl-phosphonates ; les amides, notamment dicyanamide (abrégé DCA-) ; les aluminates, notamment tetrachloroaluminate (AlCl4-), les halogénures (tels que les anions bromure, chlorure, iodure...), les cyanates, les acétates (CH3COO-), notamment trifluoroacétate ; les sulfonates, notamment méthanesulfonate (CH3SO3-), trifluorométhanesulfonate ; les sulfates, notamment notamment ethyl sulfate, hydrogène sulfate, et leurs mélanges.

Par sel organique au sens de l'invention, on entend plus particulièrement tout sel organique stable aux températures utilisées lors de la synthèse du copolymère à blocs selon le procédé de l'invention. L'homme du métier peut se reporter aux fiches techniques des sels organiques, qui indiquent la température limite de décomposition de chaque sel organique.

A titre d'exemples de sels organiques utilisables dans le procédé de synthèse selon l'invention, on peut citer notamment les sels organiques à base de cation ammonium, à base de cation imidazolium ou de cation imidazolinium, à base de cation pyridinium, à base de cation dihydropyridinium, à base de cation tétrahydropyridinium, à base de cation pyrrolidinium, à base de cation guanidine, à base de cation phosphonium.

Les sels organiques à base de cation ammonium associent par exemple:
- un cation N-trimethyl-N-propylammonium avec un anion bis(trifluoromethanesulfonyl)imide ;
- un cation N-trimethyl-N-butylammonium ou N-trimethyl-N-hexylammonium avec un anion choisi parmi le bromure, le tetrafluoroborate, l'hexafluorophosphate, le bis(trifluoromethanesulfonyl)imide ;
- un cation N-tributyl-N-methylammonium avec un anion iodure, bis(trifluoromethanesulfonyl)imide, ou dicyanamide ;
- un cation tetraethylammonium avec un anion tetrafluoroborate ;
- un cation (2-hydroxyéthyl)triméthylammonium avec un anion diméthylphosphate
- un cation di(2-hydroxyéthyl)ammonium avec un anion trifluoracétate ;
- un cation N,N-di(2-méthoxy)éthylammonium avec un anion sulfamate ;
- un cation N,N-diméthyl(2-hydroxyéthyl)ammonium avec un anion 2-hydroxyacétate ou trifluoroacétate ;
- un cation N-éthyl-N,N-diméthyle-2-méthoxyéthyle ammonium avec un anion bis(trifluorométhylsulfonyl)imide ;
- un cation éthyl-diméthyl-propylammonium et un anion bis(trifluorométhylsulfonyl)imide ;
- un cation méthyltrioctylammonium et una anion bis(trifluorméthylsulfonyl)imide ;
- un cation méthyltrioctylammonium et un anion trifluoroacétate ou trifluorométhylsulfonate ;
- un cation tétrabutylammonium et un anion bis(trifluorométhyl sulfonyl)imide ;
- un cation tétraméthylammonium et un anion bis(oxalato(2-))-borate ou tris(pentafluoroéthyl)trifluorophosphate ;
On peut également citer les sels organiques à base d'imidazole, tels que les imidazoles disubstitués, imidazoles monosubstitués, imidazoles trisubstitués ; en particulier ceux à base de cation imidazolium ou de cation imidazolinium.

On peut citer les sels organiques à base de cation imidazolium associant par exemple:
- un cation H-methylimidazolium avec un anion chlorure ;
- un cation 1-éthyl-3-methylimidazolium avec un anion chlorure, bromure, tetrafluoroborate, hexafluorophosphate, trifluoromethanesulfonate, bis(trifluoromethanesulfonyl)imide, tetrachloroaluminate, ethyl-phosphonate ou methyl-phosphonate, méthanesulfonate, ethyl-sulfate, ethyl-sulfonate ;
- un cation 1-butyl-3-methylimidazolium avec un anion chlorure, bromure, tetrafluoroborate, hexafluorophosphate, trifluoromethanesulfonate, bis(trifluoromethanesulfonyl)imide, tetrachloroaluminate, acétate, hydrogen sulfate, trifluoroacetate, méthanesulfonate ;
- un cation 1,3-dimethylimidazolium avec un anion methyl-phosphonate ;
- un cation 1-propyl-2,3-dimethylimidazolium avec un anion bis(trifluoromethanesulfonyl)imide ;
- un cation 1-butyl-2,3-dimethylimidazolium avec un anion tetrafluoroborate bis(trifluoromethanesulfonyl)imide ;
- un cation 1-hexyl-3-methylimidazolium avec un anion tetrafluoroborate, hexafluorophosphate, bis(trifluoromethanesulfonyl)imide ;
- un cation 1-octyl-3-methylimidazolium avec un anion bis(trifluoromethanesulfonyl)imide.
- un cation 1-ethanol-3-methylimidazolium avec un anion chlorure, bromure, tetrafluoroborate, hexafluorophosphate, bis(trifluoromethanesulfonyl)imide, dicyanamide ;
On peut également citer à titre d'exemples les sels organiques à base de cation pyridinium tels que: N-Butyl-3-méthylpyridinium bromure, N-Butyl-méthyle-4-pyridinium chlorure, N-Butyl-méthyle-4-pyridinium tétrafluoroborate, N-Butyl-3-méthylpyridinium chlorure, N-Butyl-3-méthylpyridinium dicyanamide, N-Butyl-3-méthylpyridinium méthylsulfate, 1-Butyl-3-méthylpyridinium tétrafluoroborate, N-Butylpyridinium chlorure, N-Butylpyridinium tétrafluoroborate, N-Butylpyridinium trifluorométhylsulfonate, 1-Ethyl-3-hydroxymethylpyridinium ethylsulfate, N-Hexylpyridinium bis(trifluorométhylsulfonyl)imide, N-Hexylpyridinium trifluorométhansulfonate, N-(3-Hydroxypropyl)pyridinium bis(trifluorométhylsulfonyl)imide, N-Butyl-3-méthylpyridinium trifluorométhanesulfonate, N-Butyl-3-methylpyridinium hexafluorophosphate.

On peut également citer à titre d'exemples les sels organiques à base d'un cation pyrrolidinium tels que: Butyl-1-méthyle-1-pyrrolidinium chlorure, Butyl-1-méthylepyrrolidinium dicyanamide, Butyl-1-méthyle-1-pyrrolidinium trifluorométhanesulfonate, Butyl-1-méthyle-1-pyrrolidinium tris(pentafluoroéthyl), 1-Butyl-1-méthylpyrrolidinium bis[oxalato(2-)]borate, 1-Butyl-1-méthylpyrrolidinium bis(trifluorométhylsulfonyl)imide, 1-Butyl-1-méthylpyrrolidinium dicyanamide, 1-Butyl-1-méthylpyrrolidinium trifluoroacétate, 1-Butyl-1-méthylpyrrolidinium trifluorométhanesulfonate, Butyl-1-méthyl-1-pyrrolidinium tris(pentafluoroéthyl)trifluorophosphate, 1,1-Diméthylpyrrolidinium iodure, 1-(2-Ethoxyéthyl)-1-méthylpyrrolidinium bis(trifluorométhylsulfonyl)imide, 1-Hexyl-1-méthylpyrrolidinium bis(trifluorométhylsulfonyl)imide, 1-(2-méthoxyéthyle)-1-méthyl pyrrolidinium bis(trifluorométhylsulfonyl )imide, Méthyle-1-octyl-1-pyrrolidinium chlorure, 1-Butyl-1-méthylpyrrolidinium bromure.

On peut citer en outre les sels organiques associant :
- un cation 1-ethyl-1-methylpyrrolidinium avec un anion bromure, tetrafluoroborate, hexafluorophosphate, trifluoromethanesulfonate;
- un cation 1-butyl-1-methylpyrrolidinium avec un anion chlorure, bromure, tetrafluoroborate, hexafluorophosphate, trifluoromethanesulfonate, bis(trifluoromethanesulfonyl)imide, dicyanamide, acetate ou hydrogen sulfate ;
- un cation N-propyl-N-methylpyrrolidinium avec un anion bis(trifluoromethanesulfonyl)imide ;
- un cation 1-methyl-1-propylpiperidinium avec un anion bis(trifluoromethanesulfonyl)imide ;
On peut également citer, à titre d'exemples, les sels organiques à base d'un cation guanidine, tels que : guanidine trifluorométhylsulfonate, guanidine tris(pentafluoroéthyl)trifluoro phosphate, hexaméthylguanidine tris(pentafluoroéthyl)trifluorophosphate.

On peut citer les sels organiques à base d'un cation phosphonium tels que trihexyl(tétradecyl)phosphonium bis[oxalat(2-)]borate ; trihexyl(tétradécyl)phosphonium bis(trifluorométhylsulfonyl) imide ; trihexyl(tétradécyl)phosphonium tris(pentafluoroéthyl)trifluorophosphate.

La liste de sels organiques et de cations et anions précités pouvant entrer dans la composition des sels organiques utilisables selon l'invention, est donnée uniquement à titre d'exemples, elle n'est pas exhaustive ni limitative. Par conséquent l'addition de tout autre sel organique est bien entendu envisageable dans le procédé de l'invention, dès l'instant que la température de décomposition du sel organique est supérieure aux températures des étapes du procédé de l'invention au cours desquelles le sel organique est présent.

Avantageusement, la composition selon l'invention comprend en outre au moins un sels inorganique, c'est-à-dire un sel de metal alcalin ou sel de metal alcalinoterreux ; parmi lesquels on peut notamment citer les sels de métaux alcalins, tels que lithium, sodium, potassium, etc ; et ceux d'alcalino-terreux, tels que magnésium, calcium, etc ; avec les acides organiques (mono-ou di-carboxyliques contenant 1 à 12 atomes de carbone, par exemple l'acide formique, l'acide acétique, l'acide propionique, l'acide oxalique, l'acide succinique, etc; acides sulfoniques contenant 1 à 20 carbones, par exemple l'acide méthanesulfonique, l'acide p-toluènesulfonique, l'acide thiocyanique, etc) ou des acides minéraux (acides halohydriques, par exemple l'acide chlorhydrique, l'acide bromhydrique, l'acide perchlorique, l'acide sulfurique, l'acide phosphorique, etc). On peut citer l'acétate de potassium, de lithium ; l'acétate, le chlorure de lithium, le chlorure de magnésium, de calcium, le chlorure, le bromure de sodium, le bromure de potassium, le magnésium, le bromure, le perchlorate de lithium, le perchlorate de sodium, ou de potassium, le sulfate de potassium, le phosphate de potassium, thiocyanate, et analogues.

Parmi eux, on préfère les halogénures, de préférence le chlorure de lithium, chlorure de sodium, chlorure de potassium, les acétates de potassium et perchlorates de potassium. La quantité de sel inorganique est généralement comprise dans la gamme de 0,001 à 3%, de préférence 0,01 à 2%, sur le poids de la composition.

La composition selon l'invention peut en outre être additivée avec des stabilisants, des plastifiants, des lubrifiants, des charges naturelles ou organiques, des colorants, des pigments, de nacres, des agents antimicrobiens, des agents ignifugeants, des agents antistatiques, des agents modifiant la viscosité du copolymère, et/ou tout autre additif ou adjuvant déjà cité et bien connu de l'homme du métier dans le domaine des polymères thermoplastiques.

Avantageusement, ledit PMMA, lesdits blocs PA et/ou lesdits blocs PE de la composition selon l'invention sont issus au moins partiellement de matières premières renouvelables.

Avantageusement, la composition selon l'invention comprend une teneur en bio-carbone d'au moins 1%, qui correspond à un ratio isotopique de ¹⁴C/¹²C d'au moins 1,2.10⁻¹⁴. De préférence, ladite composition comprend une teneur en bio-carbone supérieure à 5%, de préférence supérieure à 10%, de préférence supérieure à 25%, de préférence supérieure à 50%, de préférence supérieure à 75%, de préférence supérieure à 90%, de préférence supérieure à 95%, de préférence supérieure à 98%, de préférence supérieure à 99%, avantageusement sensiblement égale à 100%.

Selon un mode particulièrement avantageux de la présente invention, les blocs polyamide et/ou les blocs polyéther et/ou le PMMA sont issus en totalité de matières renouvelables.

Un matériau d'origine renouvelable, appelé aussi biomatériau, est un matériau organique dans lequel le carbone provient de CO₂ fixé récemment (à l'échelle humaine) par photosynthèse à partir de l'atmosphère. Sur terre, ce CO₂ est capté ou fixé par les plantes. En mer, le CO₂ est capté ou fixé par des bactéries ou du plancton procédant à une photosynthèse. Un biomatériau (100% de carbone origine naturelle) présente un ratio isotopique ¹⁴C/¹²C supérieur à 10⁻¹², typiquement de l'ordre de 1,2 x 10⁻¹², tandis qu'un matériau fossile a un ratio nul. En effet, l'isotope ¹⁴C se forme dans l'atmosphère et est ensuite intégré par photosynthèse, selon une échelle de temps de quelques dizaines d'années au plus. La demi-vie du ¹⁴C est de 5730 ans. Donc les matériaux issus de la photosynthèse, à savoir les végétaux de manière générale, ont nécessairement une teneur maximale en isotope ¹⁴C.

La teneur en biomatériau ou teneur en biocarbone est déterminée en application des normes ASTM D 6866 (ASTM D 6866-06) et ASTM D 7026 (ASTM D 7026-04). La norme ASTM D 6866 a pour objet "Determining the Biobased Content of Natural Range Materials Using Radiocarbon and Isotope Ratio Mass Spectrometry Analysis", tandis que la norme ASTM D 7026 a pour objet "Sampling and Reporting of Results for Détermination of Biobased Content of Materials via Carbon Isotope Analysis". La seconde norme renvoie dans son premier paragraphe à la première. La première norme décrit un test de mesure du ratio ¹⁴C/¹²C d'un échantillon et le compare avec le ratio ¹⁴C/¹²C d'un échantillon référence d'origine 100% renouvelable, pour donner un pourcentage relatif de C d'origine renouvelable dans l'échantillon. La norme est basée sur les mêmes concepts que la datation au ¹⁴C, mais sans faire application des équations de datation.

Le ratio ainsi calculé est désigné comme le "pMC" (percent Modern Carbon). Si le matériau à analyser est un mélange de biomatériau et de matériau fossile (sans isotope radioactif), alors la valeur de pMC obtenu est directement corrélée à la quantité de biomatériau présent dans l'échantillon. La valeur de référence utilisée pour la datation au ¹⁴C est une valeur datant des années 1950. Cette année a été choisie en raison de l'existence d'essais nucléaires dans l'atmosphère qui ont introduit des grandes quantités d'isotopes dans l'atmosphère après cette date. La référence 1950 correspond à une valeur pMC de 100. Compte tenu des essais thermonucléaires, la valeur actuelle à retenir est d'environ 107,5 (ce qui correspond à un facteur de correction de 0,93). La signature en carbone radioactif d'un végétal actuel est donc de 107,5. Une signature de 54 pMC et de 99 pMC correspondent donc à une quantité de biomatériau dans l'échantillon de 50% et de 93%, respectivement.

La norme ASTM D 6866 propose trois techniques de mesure de la teneur en isotope ¹⁴C:
- LSC (Liquid Scintillation Counting) spectrométrie à scintillation liquide. Cette technique consiste à compter des particules "Bêta" issues de la désintégration du ¹⁴C. On mesure le rayonnement Bêta issu d'un échantillon de masse connue (nombre d'atomes C connu) pendant un certain temps. Cette "radioactivité" est proportionnelle au nombre d'atomes de ¹⁴C, que l'on peut ainsi déterminer. Le ¹⁴C présent dans l'échantillon émet des rayonnements ß, qui au contact du liquide scintillant (scintillateur) donnent naissance à des photons. Ces photons ont des énergies différentes (comprises entre 0 et 156 keV) et forment ce que l'on appelle un spectre de ¹⁴C. Selon deux variantes de cette méthode, l'analyse porte soit sur le CO₂ préalablement produit par l'échantillon carboné dans une solution absorbante appropriée, soit sur le benzène après conversion préalable de l'échantillon carboné en benzène. La norme ASTM D 6866 donne donc deux méthodes A et C, basées sur cette méthode LSC.
- AMS/IRMS (Accelerated Mass Spectrometry couplé avec Isotope Radio Mass Spectrometry). Cette technique se base sur la spectrométrie de masse. L'échantillon est réduit en graphite ou en CO2 gazeux, analysé dans un spectromètre de masse. Cette technique utilise un accélérateur et un spectromètre de masse pour séparer les ions ¹⁴C des ¹²C et donc déterminer le rapport des deux isotopes.

Les compositions selon l'invention proviennent au moins en partie de biomatériau et présentent donc une teneur en biomatériau d'au moins 1%, ce qui correspond à une teneur en ¹⁴C d'au moins 1,2 x 10⁻¹⁴. Cette teneur est avantageusement plus élevée, notamment jusqu'à 100%, qui correspond à une teneur en ¹⁴C de 1,2 x 10⁻¹². Les alliages selon l'invention peuvent donc comprendre 100% de bio-carbone ou au contraire résulter d'un mélange avec une origine fossile.

Avantageusement, la composition de l'invention comprend en outre au moins un agents améliorant la conductivité superficielle choisi parmi : des agents hygroscopiques ; des acides gras ; des lubrifiants ; des métaux ; des pellicules métalliques ; des poudres métalliques ; des nanopoudres métalliques ; des aluminosilicates ; des amines, telles que des amines quaternaires ; des esters ; des fibres ; du noir de carbone ; des fibres de carbone ; des nanotubes de carbone ; du polyéthylène glycol ; des polymères intrinsèquement conducteurs, tels que des dérivés de polyaniline, de polythiophène, du polypyrrole ; des masterbatches ; et leurs mélanges.

Avantageusement, la composition de l'invention comprend en outre au moins un additif et/ou adjuvant choisi parmi les charges organiques ou inorganiques, les renforts, les plastifiants, les stabilisants, les anti-oxydants, anti-UV, les retardateurs de flamme, le noir de carbone, les nanotubes de carbone ; les colorants minéraux ou organiques, les pigments, les colorants, les agents de démoulage, lubrifiants, moussants, les agents anti-choc, agents anti-retrait, les agents ignifugeants, les agents nucléants, et leurs mélanges.

La présente invention a également pour objet l'utilisation d'une composition conforme à l'invention pour la fabrication d'au moins une partie des objets suivants : pièce industrielle, pièce automobile, accessoire de sécurité, enseigne, bandeau lumineux, panneau signalétique et publicitaire, présentoir, gravure, ameublement, agencement de magasin, décoration, balle de contact, prothèse dentaire, implant en ophtalmologie, membrane pour hémodialyseur, fibres optique, objet d'art, décoration, sculpture, lentilles, notamment lentilles d'appareils photo, lentilles d'appareil photo jetable, support d'impression, notamment support d'impression directe avec encres UV pour tableau photo, vitre, toit panoramique, phares de véhicules, etc.

En définitive, les compositions transparentes à base de PMMA de l'invention ont des propriétés antistatiques améliorées en raison de la diminution de résistivité superficielle apportée par l'incorporation d'au moins un copolymère à blocs selon l'invention dans au moins une partie d'une matrice PMMA telle que définie précédemment. L'ajout dudit au moins un copolymère à ladite matrice est réalisable par tous procédés bien connus de l'homme du métier dans le domaine des polymères, notamment par mélange à sec, ou par malaxage à une température supérieure à la température de transition vitreuse des différents polymères ajoutés, ou par cisaillement à une température sensiblement égale à la température de fluidisation des différents polymères ajoutés, notamment par calandrage, par extrusion, ou encore par mélange en solution.

### Exemples

Les exemples ci-dessous illustrent la présente invention sans en limiter la portée. Dans les exemples, sauf indication contraire, tous les pourcentages et parties sont exprimés en poids.

### Produits utilisés dans les exemples:

### PEBA non conforme à l'invention :

PEBA 1 : PA12 - PEG avec des blocs PA12 de masse molaire moyenne en nombre 1500 g/mol et des blocs PEG de masse molaire moyenne en nombre 1500 g/mol, et de viscosité inhérente : 1,4.
PEBA 1b, « b » pour « basse viscosité » : PA12 - PEG avec des blocs PA12 de masse molaire moyenne en nombre 1500 g/mol et des blocs PEG de masse molaire moyenne en nombre 1500 g/mol, et de viscosité inhérente : 1,1.
PEBA conforme à l'invention :
   PEBA 2 : PA11 - PEG avec des blocs PA11 de masse molaire moyenne en nombre 1000 g/mol et des blocs PEG de masse molaire moyenne en nombre 1500 g/mol, et de viscosité inhérente : 1,4.
   PEBA 2b, « b » pour « basse viscosité » : PA11 - PEG avec des blocs PA11 de masse molaire moyenne en nombre 1000 g/mol et des blocs PEG de masse molaire moyenne en nombre 1500 g/mol, et de viscosité inhérente : 1,2.
PMMA :
   PMMA1 caractérisé par un MFI = 2 g/10 min (230°C, 3,8 kg) et un choc Charpy (entaillé) à +23°C de 2 kJ/ m².
   PMMA2 caractérisé par un MFI = 14,5 g/10 min (230°C, 3,8 kg) et un choc Charpy (entaillé) à +23°C de 2 kJ/ m².
   PMMA3 contenant un modifiant choc acrylique caractérisé par un MFI = 0,8 g/10 min (230°C, 3,8 kg) et un choc Charpy (entaillé) à +23°C de kJ/ m².

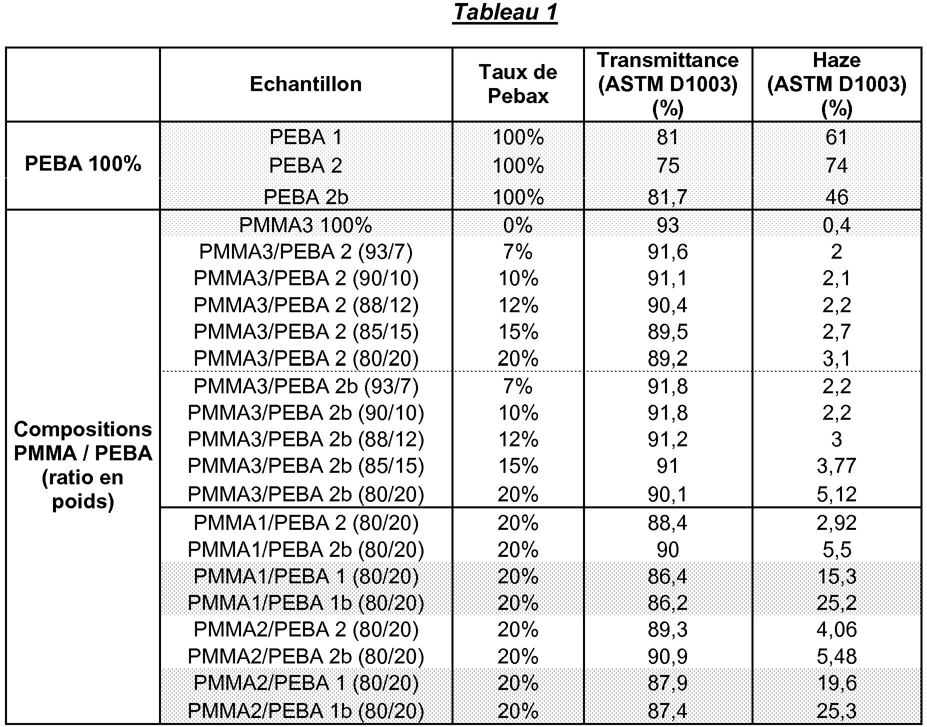

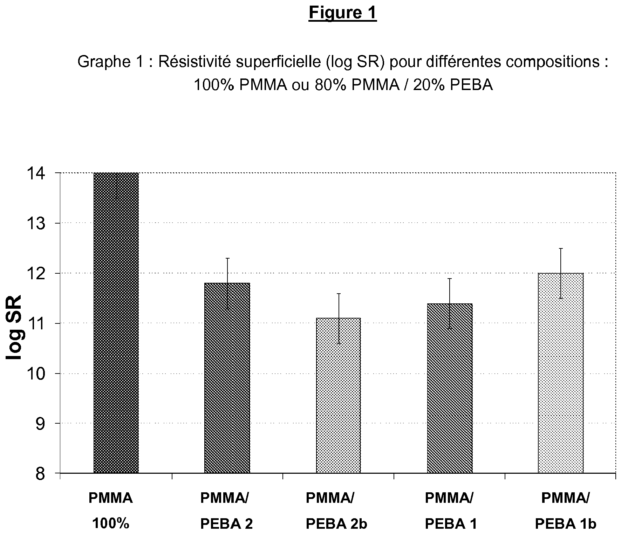

La **figure 1** (ou graphe 1) représente le log de la résistivité surfacique pour différentes compositions : 100% PMMA1 ou 80% PMMA1/20% PEBA.

La résistivité surfacique de la matrice PMMA est diminuée d'au moins 2 décades par incorporation de 20% en poids de copolymère à blocs (PEBA) sur le poids total de la composition.

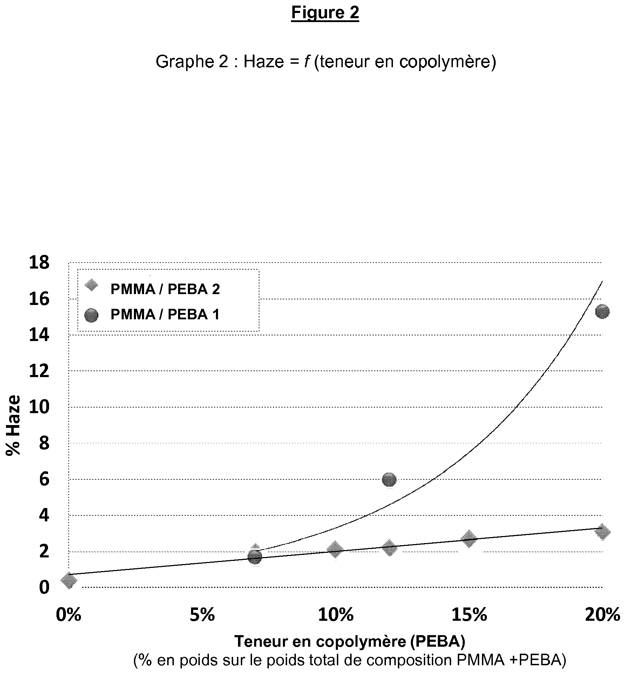

La **figure 2** (ou graphe 2) représente le Haze (%) en fonction de la teneur en PEBA (pour PEBA 1 et pour PEBA2) dans une composition à base de PMMA1.

Le Haze reste inférieur à 4% dans le cas des compositions de PMMA selon l'invention (comprenant du PEBA2), au contraire des compositions non conformes à l'invention comprenant du PEBA1).

## Revendications

1. Composition transparente antistatique à base de polyméthacrylate de méthyle (PMMA), comprenant :
- de 55 à 99,9% en poids de PMMA, et
- de 0,1 à 45% en poids d'au moins un copolymère (PEBA) à blocs polyamide (PA) et à blocs polyéther (PE) comprenant du polyéthylène glycol (PEG),
sur le poids total de la composition,
ledit copolymère étant **caractérisé en ce qu'**il comporte entre 50% et 80% en poids de PEG sur le poids total de copolymère.

2. Composition selon la revendication 1, comprenant de :
- de 65 à 97%, de préférence de 70 à 95%, de préférence de 80 à 93%, de préférence de 80 à 88%, de préférence de 85 à 88%, en poids de PMMA, et
- de 3 à 35%, de préférence de 5 à 30%, de préférence de 7 à 20%, de préférence de 12 à 20%, de préférence de 12 à 15%, en poids de copolymère comprenant du PEG,
sur le poids total de la composition.

3. Composition selon l'une quelconque des revendications 1 ou 2, dans laquelle ledit copolymère comporte de 55% à 75%, de préférence de 60 à 70%, en poids de PEG sur le poids total de copolymère.

4. Composition selon l'une quelconque des revendications précédentes, dans laquelle ledit au moins un bloc polyamide comprend au moins un des monomères de polyamide suivants: 6, 11, 12, 5.4, 5.9, 5.10, 5.12, 5.13, 5.14, 5.16, 5.18, 5.36, 6.4, 6.9, 6.10, 6.12, 6.13, 6.14, 6.16, 6.18, 6.36, 10.4, 10.9, 10.10, 10.12, 10.13, 10.14, 10.16, 10.18, 10.36, 10.T, 12.4, 12.9, 12.10, 12.12, 12.13, 12.14, 12.16, 12.18, 12.36, 12.T et leurs mélanges ou copolymères ; et de préférence choisi parmi les monomères de polyamide suivants: 6, 11, 12, 6.10, 10.10, 10.12, et leurs mélanges ou copolymères.

5. Composition selon l'une quelconque des revendications précédentes, dans laquelle les blocs PA comprennent au moins 30%, de préférence au moins 50%, de préférence au moins 75%, de préférence 100%, en poids de PA 11 sur le poids total de blocs PA.

6. Composition selon l'une quelconque des revendications précédentes, dans laquelle ledit copolymère comprend en outre au moins un polyether autre que le PEG, choisi parmi le PTMG, PPG, PO3G, et leurs mélanges.

7. Composition selon l'une quelconque des revendications précédentes, dans laquelle ledit copolymère comprend au moins un PEBA choisi parmi : PA6-PEG, PA11-PEG, PA12-PEG, PA10.10-PEG, PA10.12-PEG, et leurs mélanges ; et de préférence comprend le PA11-PEG.

8. Composition selon l'une quelconque des revendications précédentes, dans laquelle ledit copolymère comprenant des blocs PA et des blocs PE est un copolymère segmenté à blocs comprenant trois types de blocs différents, ledit copolymère étant choisi parmi les copolyétheresteramides et les copolyétheramideuréthanes.

9. Composition selon l'une quelconque des revendications précédentes, dans laquelle ledit copolymère présente une viscosité inhérente inférieure ou égale à 2 ; de préférence inférieure ou égale à 1,5 ; de préférence inférieure ou égale à 1,4 ; de préférence inférieure ou égale à 1,3 ; de préférence inférieure ou égale à 1,2.

10. Composition selon l'une quelconque des revendications précédentes, dans laquelle ledit PMMA, lesdits blocs PA et/ou lesdits blocs PE sont issus au moins partiellement de matières premières renouvelables.

11. Composition selon la revendication 10, comprenant une teneur en bio-carbone d'au moins 1%, qui correspond à un ratio isotopique de ¹⁴C/¹²C d'au moins 1,2.10⁻¹⁴.

12. Composition selon la revendication 11, comprenant une teneur en bio-carbone supérieure à 5%, de préférence supérieure à 10%, de préférence supérieure à 25%, de préférence supérieure à 50%, de préférence supérieure à 75%, de préférence supérieure à 90%, de préférence supérieure à 95%, de préférence supérieure à 98%, de préférence supérieure à 99%, avantageusement sensiblement égale à 100%.

13. Composition selon l'une quelconque des revendications précédentes, ne comprenant pas de sel organique.

14. Composition selon l'une quelconque des revendications précédentes, comprenant en outre de 0,1 à 10%, de préférence de 0,1 à 5%, en poids d'au moins un sel organique à l'état fondu par rapport au poids total de la composition.

15. Composition selon la revendication 6, dans laquelle ledit au moins un sel organique comprend au moins un cation comprenant au moins une des molécules suivantes : ammonium, sulfonium, pyridinium, pyrrolidinium, imidazolium, imidazolinium, phosphonium, lithium, guanidinium, piperidinium, thiazolium, triazolium, oxazolium, pyrazolium, et leurs leurs mélanges.

16. Composition selon l'une quelconque des revendications 6 ou 7, dans laquelle ledit au moins un sel organique comprend au moins un anion comprenant au moins une des molécules suivantes : les imides, notamment bis(trifluorométhanesulfonyl)imide; les borates, notamment tétrafluoroborate; les phosphates, notamment hexafluorophosphate; les phosphinates et les phosphonates, notamment les alkyl-phosphonates ; les amides, notamment dicyanamide; les aluminates, notamment tetrachloroaluminate ; les halogénures, tels que les anions bromure, chlorure, iodure; les cyanates ; les acétates, notamment trifluoroacétate ; les sulfonates, notamment méthanesulfonate, trifluorométhanesulfonate ; les sulfates, notamment ethyl sulfate, hydrogène sulfate ; et leurs leurs mélanges.

17. Composition selon l'une quelconque des revendications précédentes, comprenant en outre au moins un agents améliorant la conductivité superficielle choisi parmi : des agents hygroscopiques ; des acides gras ; des lubrifiants ; des métaux ; des pellicules métalliques ; des poudres métalliques ; des nanopoudres métalliques ; des aluminosilicates ; des amines, telles que des amines quaternaires ; des esters ; des fibres ; du noir de carbone ; des fibres de carbone ; des nanotubes de carbone ; du polyéthylène glycol ; des polymères intrinsèquement conducteurs, tels que des dérivés de polyaniline, de polythiophène, du polypyrrole ; des masterbatches ; et leurs mélanges.

18. Composition selon l'une quelconque des revendications précédentes, comprenant en outre au moins un additif et/ou adjuvant choisi parmi les charges organiques ou inorganiques, les renforts, les plastifiants, les stabilisants, les anti-oxydants, anti-UV, les retardateurs de flamme, le noir de carbone, les nanotubes de carbone ; les colorants minéraux ou organiques, les pigments, les colorants, les agents de démoulage, lubrifiants, moussants, les agents anti-choc, agents anti-retrait, les agents ignifugeants, les agents nucléants, et leurs mélanges.

19. Utilisation d'une composition selon l'une quelconque des revendications 1 à 18 pour la fabrication d'au moins une partie des objets suivants : pièce industrielle, pièce automobile, accessoire de sécurité, enseigne, bandeau lumineux, panneau signalétique et publicitaire, présentoir, gravure, ameublement, agencement de magasin, décoration, balle de contact, prothèse dentaire, implant en ophtalmologie, membrane pour hémodialyseur, fibres optique, objet d'art, sculpture, lentilles d'appareils photo, lentilles d'appareil photo jetable, support d'impression, notamment support d'impression directe avec encres UV pour tableau photo, vitre, toit panoramique.

## Patentansprüche

1. Transparente antistatische Zusammensetzung auf Basis von Polymethylmethacrylat (PMMA), umfassend:
- von 55 bis 99,9 Gew.-% PMMA, und
- von 0,1 bis 45 Gew.-% von wenigstens einem Copolymer (PEBA) aus Polyamidblöcken (PA) und Polyetherblöcken (PE), das Polyethylenglycol (PEG) umfasst,
bezogen auf das Gesamtgewicht der Zusammensetzung,
wobei das Copolymer **dadurch gekennzeichnet ist, dass** es zwischen 50 und 80 Gew.-% PEG bezogen auf das Gesamtgewicht des Copolymers enthält.

2. Zusammensetzung nach Anspruch 1, umfassend:
- von 65 bis 97 Gew.-%, vorzugsweise von 70 bis 95 Gew.-%, vorzugsweise von 80 bis 93 Gew.-%, vorzugsweise von 80 bis 88 Gew.-%, vorzugsweise von 85 bis 88 Gew.-% PMMA, und
- von 3 bis 35 Gew.-%, vorzugsweise von 5 bis 30 Gew.-%, vorzugsweise von 7 bis 20 Gew.-%, vorzugsweise von 12 bis 20 Gew.-%, vorzugsweise von 12 bis 15 Gew.-% Copolymer, das PEG umfasst,
bezogen auf das Gesamtgewicht der Zusammensetzung.

3. Zusammensetzung nach einem der Ansprüche 1 oder 2, wobei das Copolymer von 55 Gew.-% bis 75 Gew.-%, vorzugsweise von 60 bis 70 Gew.-% PEG, bezogen auf das Gesamtgewicht des Copolymers enthält.

4. Zusammensetzung nach einem der vorhergehenden Ansprüche, wobei der wenigstens eine Polyamidblock wenigstens eines der folgenden Polyamidmonomere umfasst: 6, 11, 12, 5.4, 5.9, 5.10, 5.12, 5.13, 5.14, 5.16, 5.18, 5.36, 6.4, 6.9, 6.10, 6.12, 6.13, 6.14, 6.16, 6.18, 6.36, 10.4, 10.9, 10.10, 10.12, 10.13, 10.14, 10.16, 10.18, 10.36, 10.T, 12.4, 12.9, 12.10, 12.12, 12.13, 12.14, 12.16, 12.18, 12.36, 12.T und ihre Mischungen oder Copolymere; und vorzugsweise aus den folgenden Polyamidmonomeren ausgewählt ist: 6, 11, 12, 6.10, 10.10, 10.12 und ihren Mischungen oder Copolymeren.

5. Zusammensetzung nach einem der vorhergehenden Ansprüche, wobei die PA-Blöcke wenigstens 30 Gew.-%, vorzugsweise wenigstens 50 Gew.-%, vorzugsweise wenigstens 75 Gew.-%, vorzugsweise 100 Gew.-% PA 11 bezogen auf das Gesamtgewicht der PA-Blöcke umfassen.

6. Zusammensetzung nach einem der vorhergehenden Ansprüche, wobei das Copolymer ferner wenigstens einen anderen Polyether als PEG umfasst, der aus PTMG, PPG, PO3G und ihren Mischungen ausgewählt ist.

7. Zusammensetzung nach einem der vorhergehenden Ansprüche, wobei das Copolymer wenigstens ein PEBA umfasst, das ausgewählt ist aus: PA6-PEG, PA11-PEG, PA12-PEG, PA10.10-PEG, PA10.12-PEG und ihren Mischungen; und vorzugsweise PA11-PEG umfasst.

8. Zusammensetzung nach einem der vorhergehenden Ansprüche, wobei das PA-Blöcke und PE-Blöcke umfassende Copolymer ein in Blöcke unterteiltes Copolymer ist, das drei Typen von unterschiedlichen Blöcken umfasst, wobei das Copolymer aus Copolyetheresteramiden und Copolyetheramidurethanen ausgewählt ist.

9. Zusammensetzung nach einem der vorhergehenden Ansprüche, wobei das Copolymer eine inhärente Viskosität von weniger als oder gleich 2; vorzugsweise von weniger als oder gleich 1,5; vorzugsweise von weniger als oder gleich 1,4; vorzugsweise von weniger als oder gleich 1,3; vorzugsweise von weniger als oder gleich 1,2 aufweist.

10. Zusammensetzung nach einem der vorhergehenden Ansprüche, wobei das PMMA, die PA-Blöcke und/oder die PE-Blöcke wenigstens teilweise aus erneuerbaren Rohstoffen hervorgegangen sind.

11. Zusammensetzung nach Anspruch 10, umfassend einen Biokohlenstoff-Gehalt von wenigstens 1 %, was einem ¹⁴C/¹²C-Isotopenverhältnis von wenigstens 1,2.10⁻¹⁴ entspricht.

12. Zusammensetzung nach Anspruch 11, umfassend einen Biokohlenstoff-Gehalt von mehr als 5 %, vorzugsweise von mehr als 10 %, vorzugsweise von mehr als 25 %, vorzugsweise von mehr als 50 %, vorzugsweise von mehr als 75 %, vorzugsweise von mehr als 90 %, vorzugsweise von mehr als 95 %, vorzugsweise von mehr als 98 %, vorzugsweise von mehr als 99 %, vorteilhafterweise von im Wesentlichen gleich 100 %.

13. Zusammensetzung nach einem der vorhergehenden Ansprüche, die kein organisches Salz umfasst.

14. Zusammensetzung nach einem der vorhergehenden Ansprüche, umfassend ferner von 0,1 bis 10 Gew.-%, vorzugsweise von 0,1 bis 5 Gew.-% von wenigstens einem organischen Salz in geschmolzenem Zustand in Bezug auf das Gesamtgewicht der Zusammensetzung.

15. Zusammensetzung nach Anspruch 6, wobei das wenigstens eine organische Salz wenigstens ein Kation umfasst, das wenigstens eines der folgenden Moleküle umfasst: Ammonium, Sulfonium, Pyridinium, Pyrrolidinium, Imidazolium, Imidazolinium, Phosphonium, Lithium, Guanidinium, Piperidinium, Thiazolium, Triazolium, Oxazolium, Pyrazolium und ihre Mischungen.

16. Zusammensetzung nach einem der Ansprüche 6 oder 7, wobei das wenigstens eine organische Salz wenigstens ein Anion umfasst, das wenigstens eines der folgenden Moleküle umfasst: Imide, insbesondere Bis(trifluormethansulfonyl)imid; Borate, insbesondere Tetrafluorborat; Phosphate, insbesondere Hexafluorphosphat; Phosphinate und Phosphonate, insbesondere Alkylphosphonate; Amide, insbesondere Dicyanamid; Aluminate, insbesondere Tetrachloraluminat; Halogenide wie z.B. Bromid-, Chlorid-, Jodidanionen; Cyanate; Acetate, insbesondere Trifluoracetat; Sulfonate, insbesondere Methansulfonat, Trifluormethansulfonat; Sulfate, insbesondere Ethylsulfat, Hydrogensulfat; und ihre Mischungen.

17. Zusammensetzung nach einem der vorhergehenden Ansprüche, umfassend ferner wenigstens ein die Oberflächenleitfähigkeit verbesserndes Mittel, ausgewählt aus: hygroskopischen Mitteln; Fettsäuren; Schmierstoffen; Metallen; Metallfilmen; Metallpulvern; Metall-Nanopulvern; Aluminosilikaten; Aminen wie z.B. quartären Aminen; Estern; Fasern; Kienruß; Kohlenstofffasern; Kohlenstoffnanoröhren; Polyethylenglycol; intrinsisch leitfähigen Polymeren wie z.B. Polyanilin-, Polythiophen-, Polypyrrol-Derivaten; Masterbatches; und ihren Mischungen.

18. Zusammensetzung nach einem der vorhergehenden Ansprüche, umfassend ferner wenigstens einen Zusatzstoff und/oder Hilfsstoff, ausgewählt aus organischen oder anorganischen Füllstoffen, Verstärkern, Weichmachern, Stabilisatoren, Antioxidantien, Anti-UV-Mitteln, Flammschutzmitteln, Kienruß, Kohlenstoffnanoröhren; mineralischen oder organischen Farbstoffen, Pigmenten, Farbstoffen, Formentrennmitteln, Schmiermitteln, Schäumungsmitteln, Stoßschutzmitteln, Schrumpfschutzmitteln, Flammschutzmitteln, Keimbildungsmitteln und ihren Mischungen.

19. Verwendung einer Zusammensetzung nach einem der Ansprüche 1 bis 18 zur Herstellung von wenigstens einem Teil der folgenden Gegenstände: Industrieteil, Automobilteil, Sicherheitszubehör, Schild, Leuchtband, Anzeige- und Werbetafel, Verkaufsständer, Gravur, Möbel, Ladeneinrichtung, Dekoration, Kontaktball, Zahnprothese, ophtalmologisches Implantat, Membran für Hämodialysegerät, optische Fasern, Kunstgegenstand, Skulptur, Linsen für Fotoapparat, Linsen für Einweg-Fotoapparat, Druckträger, insbesondere Träger für direkten Druck mit UV-Druckfarben für Fotoplatten, Fensterscheibe, Panoramadach.

## Claims

1. A transparent antistatic composition based on polymethyl methacrylate (PMMA), comprising:
- 55% to 99.9% by weight of PMMA, and
- 0.1% to 45% by weight of at least one polyamide (PA) block-containing and polyether (PE) block-containing copolymer (PEBA) comprising polyethylene glycol (PEG),
with respect to the total composition weight,
said copolymer being **characterized in that** it comprises in the range between 50% to 80% by weight of PEG with respect to the total weight of copolymer.

2. The composition as claimed in claim 1, comprising:
- 65% to 97%, preferably 70% to 95%, preferably 80% to 93%, preferably 80% to 88%, preferably 85% to 88% by weight of PMMA, and
- 3% to 35%, preferably 5% to 30%, preferably 7% to 20%, preferably 12% to 20%, preferably 12% to 15% by weight of copolymer comprising PEG,
with respect to the total composition weight.

3. The composition as claimed in claim 1 or claim 2, in which said copolymer comprises 55% to 75%, preferably 60% to 70% by weight of PEG with respect to the total weight of copolymer.

4. The composition as claimed in any one of the preceding claims, in which said at least one polyamide block comprises at least one of the following polyamide monomers: 6, 11, 12, 5.4, 5.9, 5.10, 5.12, 5.13, 5.14, 5.16, 5.18, 5.36, 6.4, 6.9, 6.10, 6.12, 6.13, 6.14, 6.16, 6.18, 6.36, 10.4, 10.9, 10.10, 10.12, 10.13, 10.14, 10.16, 10.18, 10.36, 10.T, 12.4, 12.9, 12.10, 12.12, 12.13, 12.14, 12.16, 12.18, 12.36, 12.T and mixtures thereof or copolymers; and preferably selected from the following polyamide monomers: 6, 11, 12, 6.10, 10.10, 10.12, and their mixtures or copolymers.

5. The composition as claimed in any one of the preceding claims, in which the PA blocks comprise at least 30%, preferably at least 50%, preferably at least 75%, preferably 100% by weight of PA 11 with respect to the total weight of PA blocks.

6. The composition as claimed in any one of the preceding claims, in which said copolymer further comprises at least one polyether other than PEG selected from PTMG, PPG, PO3G, and mixtures thereof.

7. The composition as claimed in any one of the preceding claims, in which said copolymer comprises at least one PEBA selected from: PA6-PEG, PA11-PEG, PA12-PEG, PA10.10-PEG, PA10.12-PEG and mixtures thereof; and preferably comprises PA11-PEG.

8. The composition as claimed in any one of the preceding claims, in which said copolymer comprising PA blocks and PE blocks is a segmented block copolymer comprising three different types of blocks, said copolymer being selected from copolyetheresteramides and copolyetheramideurethanes.

9. The composition as claimed in any one of the preceding claims, in which said copolymer has an inherent viscosity of 2 or less; preferably 1.5 or less; preferably 1.4 or less; preferably 1.3 or less; preferably 1.2 or less.

10. The composition as claimed in any one of the preceding claims, in which said PMMA, said PA blocks and/or said PE blocks are obtained at least in part from renewable starting materials.

11. The composition as claimed in claim 10, comprising a quantity of biocarbon of at least 1%, which corresponds to a ¹⁴C/¹²C isotopic ratio of at least 1.2 x 10⁻¹⁴.

12. The composition as claimed in claim 11, comprising a quantity of biocarbon of more than 5%, preferably more than 10%, preferably more than 25%, preferably more than 50%, preferably more than 75%, preferably more than 90%, preferably more than 95%, preferably more than 98%, preferably more than 99%, advantageously substantially equal to 100%.

13. The composition as claimed in any one of the preceding claims, comprising no organic salt.

14. The composition as claimed in any one of the preceding claims, further comprising 0.1% to 10%, preferably 0.1% to 5% by weight of at least one organic salt in the molten state with respect to the total composition weight.

15. The composition as claimed in claim 6, in which said at least one organic salt comprises at least one cation comprising at least one of the following molecules: ammonium, sulfonium, pyridinium, pyrrolidinium, imidazolium, imidazolinium, phosphonium, lithium, guanidinium, piperidinium, thiazolium, triazolium, oxazolium, pyrazolium, and mixtures thereof.

16. The composition as claimed in any one of claims 6 or 7, in which said at least one organic salt comprises at least one anion comprising at least one of the following molecules:imides,especially bis(trifluoromethanesulfonyl)imide; borates, especially tetrafluoroborate;phosphates,especially hexafluorophosphate; phosphinates and phosphonates, especially alkyl-phosphonates; amides, especially dicyanamide; aluminates, especially tetrachloroaluminate, halides such as bromide, chloride, iodide anions; cyanates; acetates, especially trifluoroacetate; sulfonates, especially methanesulfonate, trifluoromethanesulfonate; sulfates, especially ethyl sulfate, hydrogen sulfate, and mixtures thereof.

17. The composition as claimed in any one of the preceding claims, further comprising at least one agent improving the surface conductivity selected from: hygroscopic agents; fatty acids; lubricants; metals; metallic films; metallic powders; metallic nanopowders; aluminosilicates; amines such as quaternary amines; esters; fibers; carbon black; carbon fibers; carbon nanotubes; polyethylene glycol; intrinsically conductive polymers such as polyaniline, polythiophene, polypyrrole derivatives; masterbatches; and mixtures thereof.

18. The composition as claimed in any one of the preceding claims, further comprising at least one additive and/or adjuvant selected from organic or inorganic fillers, reinforcing agents, plasticizers, stabilizers, antioxidants, UV screens, flame retardants, carbon black, carbon nanotubes; mineral or organic colorants, pigments, colorants, unmoulding agents, lubricants, foaming agents, shock resistant agents, shrink resistant agents, flame retardants, nucleating agents, and mixtures thereof.

19. Use of a composition as claimed in any one of claims 1 to 18, for the manufacture of at least a portion of the following items: an industrial part, an automobile part, a safety accessory, sign, luminous strip, signalling and advertizing panel, display, etching, furniture, shop fitting, decoration, contact ball, dental prosthesis, ophthalmological implant, membrane for hemodialysis, optic fibers, artwork, sculpture, camera lenses, disposable camera lenses, printing support, in particular a support for direct printing with UV inks for pictures, photographs, window glass, panoramic roof.
